# EUROPEAN PATENT APPLICATION

(11) **EP 1 345 130 A1**
(43) Date of publication of application: **17.09.2003**
(21) Application number: 02251780.9
(22) Date of filing: 13.03.2002
(51) Int. Cl.: G06F 17/30

(54) **Searching tool**

(71) Applicant: BRITISH TELECOMMUNICATIONS public limited company, London EC1A 7AJ (GB)
(72) Inventor: The designation of the inventor has not yet been filed
(74) Representative: Read, Matthew Charles

(57) **Abstract**

A tool for maintaining and searching a plurality of taxonomies comprises first and second user inputs (49,53) for maintaining a first and second individual taxonomies (10,11) that utilise different classifications; a device (46,55) operable to create and maintain joins (41-45) between semantically equivalent terms in the taxonomies; and a searching tool (57,46) to search for items classified in accordance with the classification of one the taxonomies, utilising the joins to locate items classified by equivalent terms in the other of the taxonomies. Thus a search can be extended to different taxonomies without having to define an individual searching strategy for each different, searched taxonomy.

## Description

This invention relates to a searching tool for locating items classified according to different taxonomies.

Computerised searching techniques are widely used to locate items of interest, for example based on keyword searching. Search engines using such techniques are well known and used widely on the Internet.

It is also known in particular subject areas or domains, to classify individual items in terms of elements of a so-called taxonomy, which comprises a classification scheme that uses a controlled vocabulary of words that have specific meanings in relation to the subject area. The set of words for a particular taxonomy are used according to a predetermined linguistic syntax. Nodes and elements for classification purposes are defined within the taxonomy. Items to be searched are classified in terms of the nodes and elements. Computerised searching within an individual taxonomy can be carried out with much greater precision than merely using keyword searching since individual items to be searched are characterised in terms of specific taxonomic nodes and elements rather than just individual words, and are located by reference to the nodes and elements of the taxonomy.

Usually, the taxonomy is maintained and updated by a controlling authority such as a committee or a Standards Body, to take account of real-world developments. For example, a particular part of the classification may require new sub-classifications to take account of changes in goods or services within a particular domain. Also, certain parts of the classification may fall out of use and require deletion.

An ontology is associated with the taxonomy. In this context, the ontology comprises a common terminology for use by members of a communicating community. It would be desirable for the taxonomy to be applicable to an ontology covering more than one domain, but this approach is limited in that the terminology used is often a compromise achieved by committee or by the dictate of the controlling authority. Thus, to extend or modify the taxonomy requires a dialogue between interested parties that can be time consuming.

Thus, hitherto, searches have been carried out in taxonomies for different domains in order to cover the desired search area, which requires different searches according to the different taxonomies.

The present invention provides a tool for maintaining and searching a plurality of taxonomies, comprising first and second user inputs for maintaining a first and second individual taxonomies that utilise different classifications; a device operable to create and maintain joins between semantically equivalent terms in the taxonomies; and a searching tool to search for items classified in accordance with the classification of one the taxonomies, utilising the joins to locate items classified by equivalent terms in the other of the taxonomies.

Thus, in accordance with the invention a search can be extended to further taxonomies without needing to re-define a searching strategy in terms of the further taxonomies.

Each of the taxonomies may be configured in a plurality of layers of specificity and the search tool may search for matches between a user defined searching strategy and stored items classified in accordance with the taxonomy in the layers selectively. The joins may be provided between corresponding levels in the taxonomies to allow the search to be extended from one taxonomy to another.

Each of the taxonomies may comprise elements defined in words according to an individual syntax and at least one of the links may be provided between elements of the respective taxonomies.

The elements in the individual taxonomies may linked by individual nodes and at least one of the links may be provided between the nodes of the respective taxonomies.

The words of the syntax for the individual taxonomies may be contained in a dictionary thereof and the words in the dictionary may be contained in a thesaurus for each taxonomy. At least one of the links may be provided between words in the thesauri for the respective taxonomies.

At least one of the links may be contained in an inter-domain thesaurus that links word meanings for the two taxonomies.

The invention also includes a method of searching for stored data items that have been classified in accordance with different taxonomies that are individually maintained and updated wherein joins are created and maintained between semantically equivalent terms in the taxonomies; the method comprising searching for items classified in accordance with the classifications of one the taxonomies, and utilising the joins to locate items classified by equivalent terms in the other of the taxonomies

In order that the invention may be more fully understood an embodiment thereof will now be described by way of example with reference to the accompanying drawings in which:
Figure 1 is a schematic illustration of a taxonomy,
Figure 2 is a schematic illustration of an ontology that includes a central taxonomy and two satellite taxonomies,
Figure 3 is a diagram of a data model for the central taxomony,
Figure 4 illustrates data objects for the central taxonomy and one of the satellite taxonomies,
Figure 5 illustrates joins between data objects for the central taxonomy and one of the satellite taxonomies,
Figure 6 is a block diagram for a tool in accordance with the invention,
Figures 7A and 7B illustrate a search input window and search result window for carrying out a search through the central taxonomy,
Figure 8 is a block diagram of the searching process for the search set up in
Figure 7A,

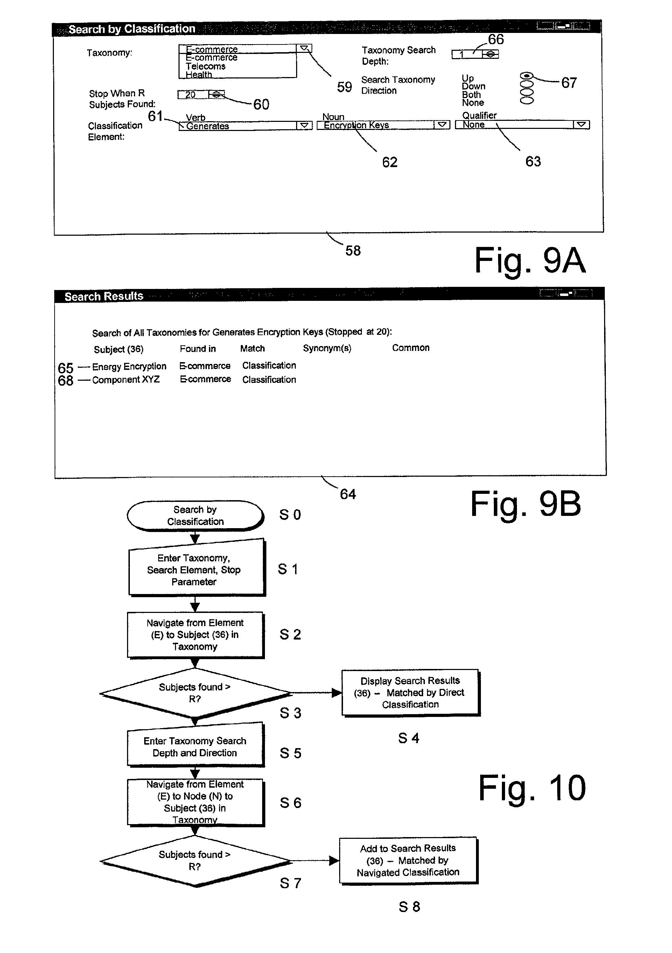

Figures 9A and 9B illustrate a search input window and search result window for carrying out a more comprehensive search through the central taxonomy,
Figure 10 is a block diagram of the searching process for the search set up in
Figure 9A,

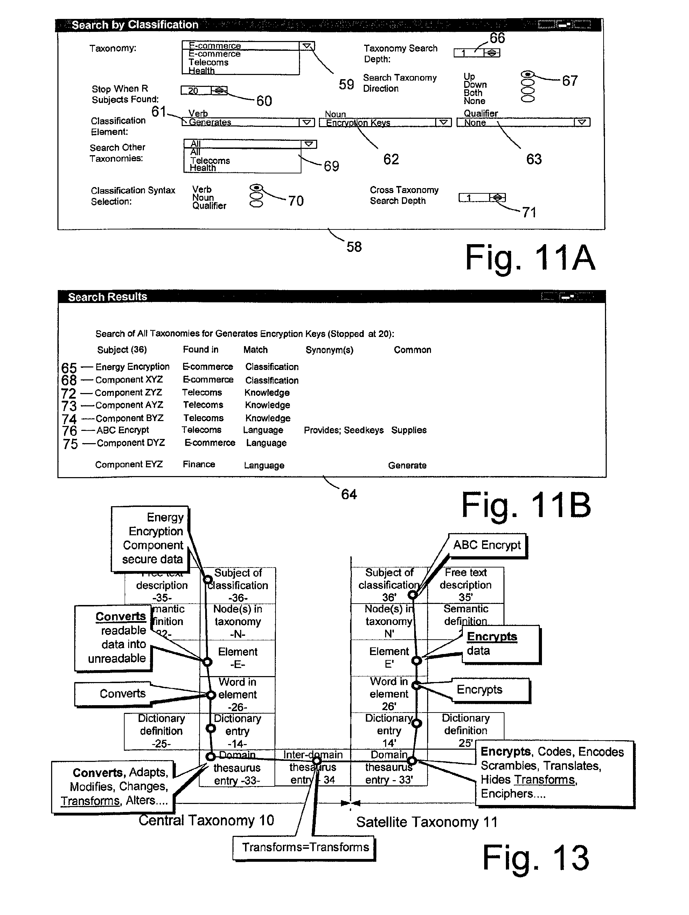

Figures 11A and 11B illustrate a search input window and search result window for carrying out a search through the central taxonomy and the satellite taxonomies in accordance with the invention,

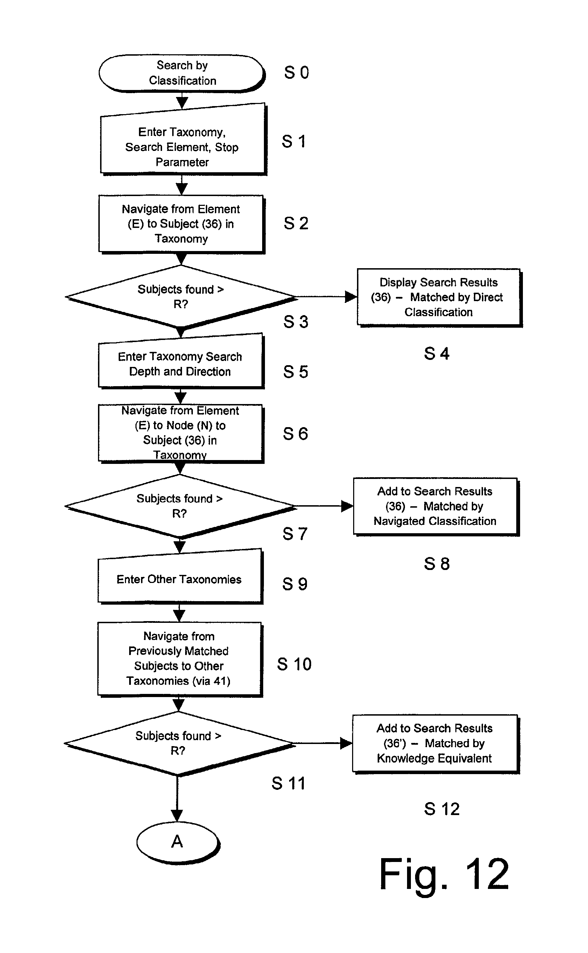

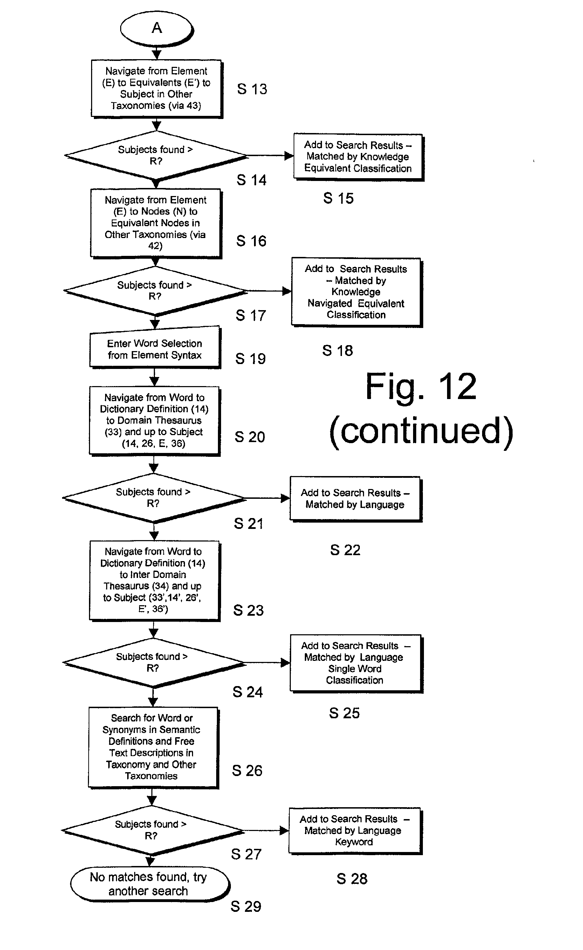

Figure 12 is a block diagram of the searching process for the search set up in
Figure 11A,

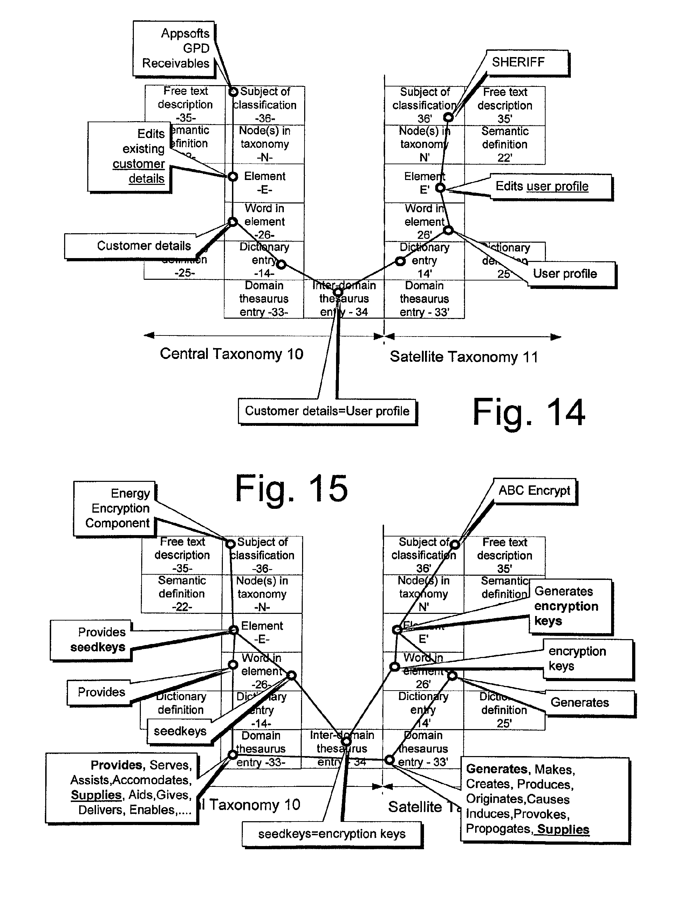

Figure 13 illustrates links between the central taxonomy and one of the satellite taxonomies for a matched ACTION;
Figure 14 illustrates corresponding links for a matched OBJECT, and
Figure 15 illustrates corresponding lines for a matched ACTION OBJECT.

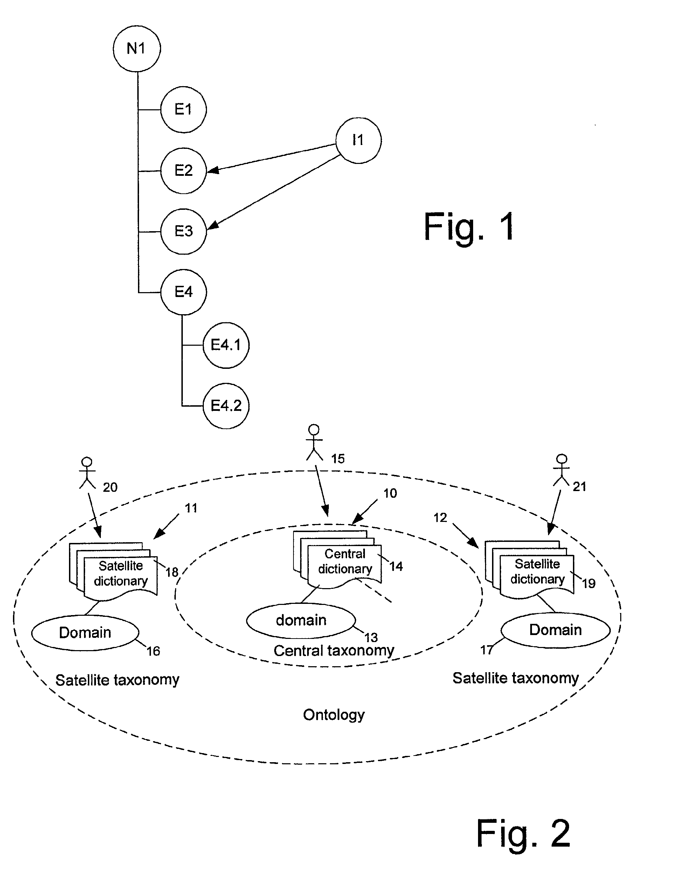

Figure 1 is a schematic illustration of a taxonomy for a particular domain. The taxonomy comprises an ordered selection of elements E arranged to specify their interrelationship. Typically, the relationship is configured as a tree but other configurations are possible. An item external to the taxonomy, can be classified in terms of the nodes and elements of the taxonomy. In more detail, the taxonomy of Figure 1 consists of a node N1 with a number of more specific elements E1-E4. Element E4 itself acts as a node and has a sub-classification that comprises elements E4.1 and E4.2. An item I1 to be classified can thus be characterised in terms of the node and elements shown in Figure 1. To give a simple example, the Item I1 may comprise an electric kettle capable of boiling water for 16 cups of tea within two minutes. The node and elements for the taxonomy may be configured as follows:
N1 = water boiling devices
E1 = small kettles
E2 = big kettles
E3 = fast boiling kettles
E4 = kettles with special electrical connections
E4.1 = cordless
E4.2 = cable connection

Thus, as shown in Figure 1, the item I1 can be characterised in terms of elements E2 and E3 of the taxonomy i.e. the kettle comprises a big kettle, which is fast boiling.

It will be understood that this taxonomy is appropriate for the domain of domestic appliances and would not be appropriate for other types of water boiling devices used in a different domain, for example water boiling devices used in power stations, which would require a different taxonomy.

In order for the taxonomy of Figure 1 to be effective, it needs to be maintained by an external change authority to take account of changes in classification that occur with time. As will be explained later, a central dictionary is provided under the control of a librarian, which allows the taxonomy to be changed and updated to include new classification elements as required.

There is a limit to the extent and numbers of the domains that can be encompassed by an individual taxonomy and an ontology usually involves more than one taxonomy.

Figure 2 illustrates schematically a central taxonomy 10 together with two satellite taxonomies 11, 12. The central taxonomy comprises elements in a domain 13 together with a central dictionary 14 that is controlled by a librarian 15, to provide a change control regime by which the organisation of the taxonomy can be updated and modified. The satellite taxonomies 11, 12 are structured in a similar way, with individual domains 16, 17 and associated dictionaries 18, 19 under the control of librarians 20, 21.

The central and satellite taxonomies in combination provide an ontology covering all of the domains 13, 16, 17. However, the change control functionality for the individual taxonomies is separately controlled since the organisation of the taxonomies is arranged on an individual basis and they need to be controlled separately. Consequently, individual searches need to be carried out in the taxonomies if a comprehensive search is to be carried out in the ontology. The invention provides a solution to this problem.

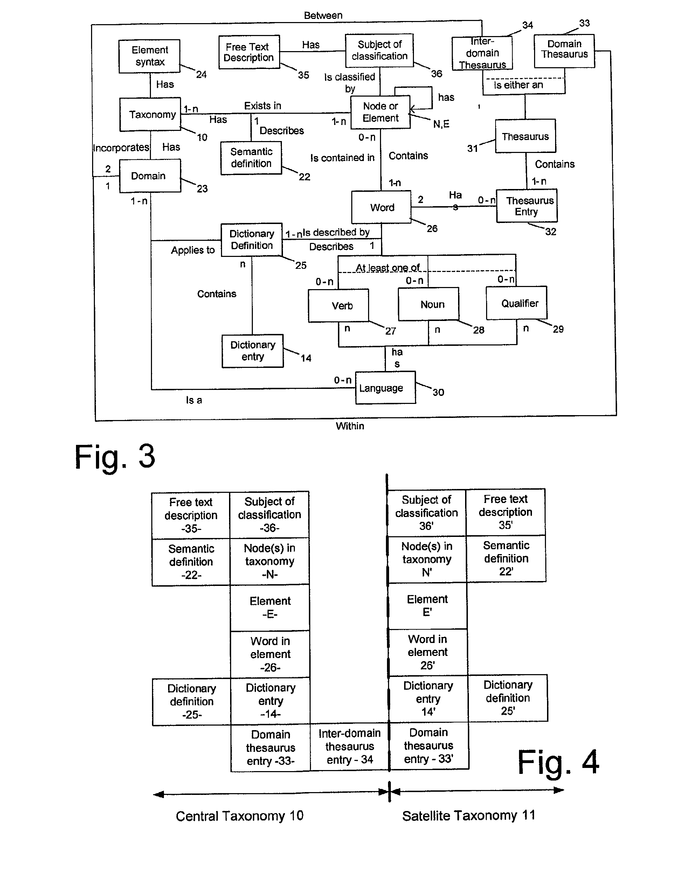

Figure 3 illustrates a data model for items classified in accordance with one of the taxonomies shown in Figure 2, for example the central taxonomy 10. The taxonomy 10 has a number of nodes or elements N, E. The classified item is given a semantic definition 22 when classified by the librarian 15 (Figure 2). As will be explained hereinafter, the semantic definition comprises a definition of the functional abilities (FABs) of the classified item. The taxonomy 10 pertains to a particular domain, referenced 23 in Figure 3. The taxonomy 10 makes use a particular predefined element syntax 24 that comprises a set of semantic rules for the use of words within the taxonomy.

The syntax may comprise:
- ACTION: This corresponds to a verb in the English language
- ACTION QUALIFIER: A word or phrase which qualifies the ACTION , such as an adverb in the English language
- OBJECT: This corresponds to a noun in the English language
- OBJECT QUALIFIER: A word or phrase which qualifies the OBJECT , such as an adjective in the English language

Considering the semantic definition 22 in more detail, in order to classify an item in accordance with the taxonomy, use is made of the syntax 24 and an example is set out below. The example comprises an element E of the taxonomy classified in terms of its FAB.
{(<ACTIONQUALIFIER> <SEPERATOR>) <ACTION> (<SEPERATOR> < OBJECTQUALIFIER>)<SEPERATOR><OBJECT>(<SEPERATOR><OBJE CTQUALIFIER>) }
Specific examples will be described in detail hereinafter.

As previously mentioned, the taxonomy has an associated dictionary 14 (also shown in Figure 2) which provides dictionary definitions 25 made up of words 26 according to syntax 24. The words may comprise verbs 27, nouns 28 and so-called qualifiers 29 that together make up language 30 for the domain 23.

The domain also has an associated thesaurus 31 in which words 26 have thesaurus entries 32. Two thesauri are provided. Domain thesaurus 33 is configured specifically for the individual domain 13, appropriate for the central taxonomy 10 in this example. Additionally, an inter-domain thesaurus 34 is provided which includes joins to the corresponding thesaurus of at least one of the other, satellite taxonomies 11, 12.

A free text description 35 of the classified item is provided, which is linked in terms of the subject of classification 36 to at least one node and element N, E.

Thus, when a new item is classified for inclusion within the central taxonomy 10, the librarian gives the item a free text description and classifies it making use of the words, nodes and elements of the particular taxonomy, in accordance with the data structure shown in Figure 3. A similar process is carried out in order to classify items for inclusion in the satellite taxonomies, individually.

Figure 4 illustrates components of the central taxonomy 10 and satellite taxonomy 11. The central and satellite taxonomies 10, 11 can each be considered to comprise an overlying series of levels of specificity of classification, namely subject of classification 36, nodes in the taxonomy N, element E, word 26, dictionary entry 14 and domain thesaurus 33. The components for the central taxonomy 10 have the same reference numbers as those shown in Figure 3 and the items for satellite taxonomy 11 correspond to those of Figure 3 but marked with a prime.

In accordance with the invention, links or joins are set up between the components shown in Figure 4 in order to facilitate searching between domains. Thus, a search can be carried out initially in the central taxonomy 10 and equivalent terms can be found in the satellite taxonomy 11 (or 12) without having to carry out separate searches.

As will be explained in more detail later, the data items shown in Figure 4 are included in at least one database and a search is carried out by navigating joins established between objects in the database.

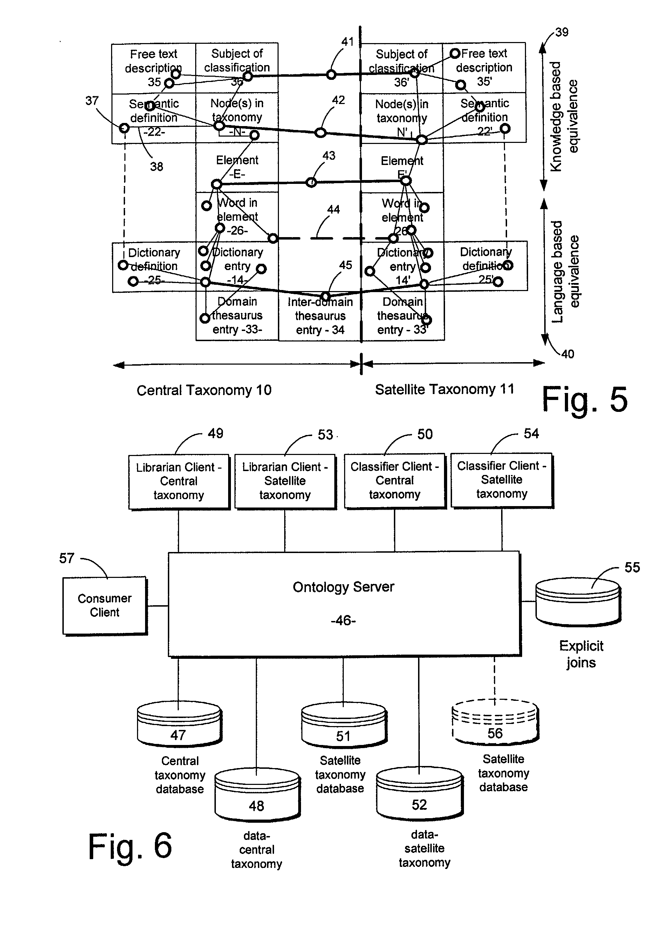

Referring now to Figure 5, levels of equivalence between nodes in the databases for the central taxonomy 10 and the satellite taxonomy 11 are shown schematically, overlying the data objects shown in Figure 4. Circles such as circle 37 illustrate stored objects in the database schematically and navigable joins in the database are shown by a thin black line such as line 38. Joins between equivalent objects in the central taxonomy 10 and satellite taxonomy 11 can be derived based on specific knowledge or a language based equivalence. Arrow 39 indicates the joins based on knowledge and arrow 40 indicates the region of joins based on language equivalence.

Considering knowledge based equivalence, the librarian may determine as a result of practical experience that a particular classification subject 36, node N or element E in the central taxonomy 10 has a strong, explicit equivalence to particular classification subject 36', node N' or element E' in the satellite taxonomy 11, in which case, objects 41, 42, 43, corresponding to the joins may be stored in the database. The link objects 41, 42, and 43 contain information about the equivalent objects in the two taxonomies and may also include data concerning the strength of the equivalence.

With regard to language-based equivalence, corresponding words may occur in the elements of both taxonomies, which provides a strong implicit equivalence of the correspondence of the elements concerned in the two taxonomies. This is illustrated for example by join 44, shown in dotted outline to signify an implicit equivalence.

Furthermore, explicit language based equivalence may be found through the inter-domain thesaurus 34. Thus, object 45 corresponding to a particular thesaurus entry provides a map between an individual dictionary entry 14 and a corresponding dictionary entry 14' in the two taxonomies.

A schematic implementation will now be described with reference to Figure 6, which provides a tool for searching both the central taxonomy 10 and the satellite taxonomy 11 using the links shown in Figure 5.

Referring to Figure 6, an ontology server 46 is coupled to a central taxonomy database 47 in which data is stored corresponding to the current version of the central taxonomy. The database 48 corresponding to domain 13 for the central taxonomy shown in Figure 2 contains data concerning items that have been categorised according to the classification scheme for the central taxonomy. For example, the database 48 contains data corresponding to software objects for use in constructing software solutions applicable to e-commerce, hereinafter referred to as the e-commerce domain. The database 48 may comprise more than one physical site operated by individual software suppliers to provide information about their products. The database 48 may be accessible through the Internet or other wide area network.

The central taxonomy database 47 is maintained by a librarian client 49, which allows a librarian to modify and update the classification scheme for the central taxonomy, so as to sub-divide elements into sub-elements or remove elements or nodes. The librarian client may carry out integrity testing to ensure that when changes are made to the central taxonomy they do not impact badly on the data stored in database 48. It will be understood that careful control and testing needs to be performed before any modification to the configuration of nodes and elements is carried out.

A classifier client 50 for the central taxonomy is provided to allow third parties to make requests to the librarian for changes to the central taxonomy. For example, if a software supplier introduces a new product range with features, which are not classifiable readily in terms of the central taxonomy, the supplier may request that the taxonomy be amended to include additional words or elements to characterise the features of the software with more precision.

The satellite taxonomy 11 is supported by a satellite taxonomy database 51 together with a database 52 that stores information concerning items that have been classified in accordance with the satellite taxonomy. For example, the satellite taxonomy may be used to classify software objects for use in telecommunications, hereinafter the telecoms domain. Suppliers of software solutions may provide the data in database 52 and the suppliers making use of the satellite taxonomy may maintain the data.

An individual librarian client 53 and classifier client 54 which operate in the same way as the clients 49, 50 for the central taxonomy, support the satellite taxonomy 11. Thus, change control for the two taxonomies is handled separately, since the terminology used in the e-commerce domain is significantly different from the terminology used in the telecoms domain.

The joins between the two taxonomies are stored in a join database 55. For example, the explicit joins 41 - 45 shown in Figure 5 are stored in the database 55.

It will be understood that further satellite taxonomies such as taxonomy 12 shown in Figure 1 can be coupled to the ontology server and database 56, which corresponds to satellite taxonomy 12, is shown in dotted outline by way of example. The database 56 is provided with its own librarian and classifier client although these are not shown in Figure 6 in order to simplify the drawing.

A consumer client 57 is coupled to the ontology server 46 to allow a consumer to carry out a search. A computer such as a conventional PC or network workstation with a processor, keyboard and display screen may implement the consumer client 57. In this example, the search is carried out for software objects for use in building a software enterprise solution for use in e-commerce. However not all of the software objects may necessarily be found by searching the central, e-commerce domain. Some may be found by searching the satellite, telecoms domain. The software objects have previously been classified according to the taxonomies of their respective domains, using the previously described syntax and their corresponding classifications are stored in the databases 48, 52

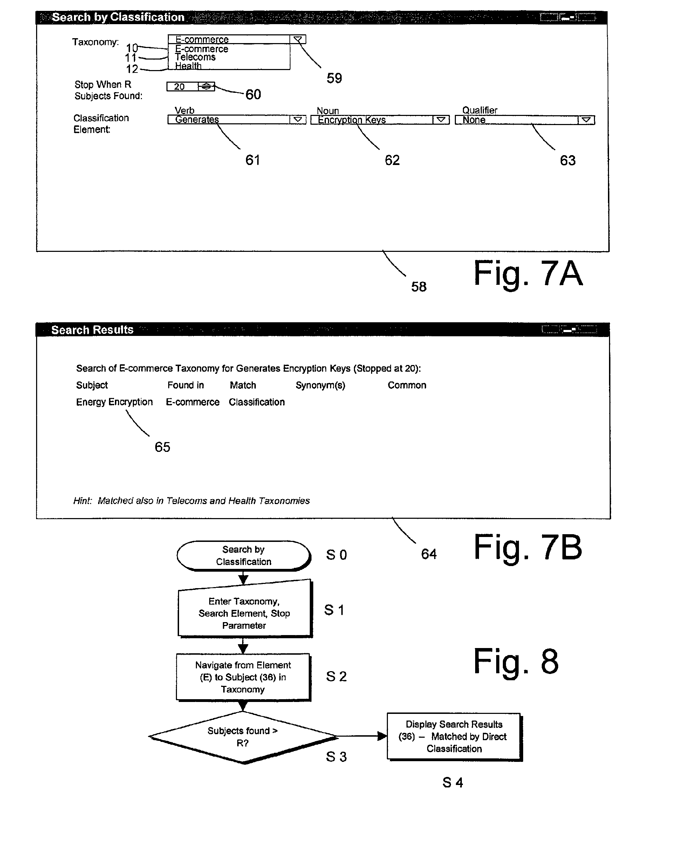

A method of performing a search will now be described. In broad outline, a customer wishes to locate a software object that can perform a particular function. Initially, the consumer client 57 is used to establish criteria for the search. A definition of the required software functionality is established. This may be set up as a semantic definition of the FAB of the software requirement, defined in the syntax of the central taxonomy 10. A series of progressively more complex searches will be described, starting with a search in a single taxonomy. Figure 7A illustrates the screen display for the consumer client 57 shown in Figure 6. The display comprises a search window 58, with a drop down menu 59 that allows selection of a particular taxonomy. In this example, the central, e-commerce taxonomy 10 is selected. However, the telecoms taxonomy 11 or the taxonomy 12 may be selected. In this example taxonomy 12 corresponds to "health". A number R of desired search results can be selected using dialogue box 60. In this example, R = 20.

The search is carried out for elements E with selected FABs specified using the syntax of the taxonomy. Words from the syntax are selected from drop down menu lists 61, 62 and 63 for a verb, noun and qualifier respectively. In this example, a search is carried out for software components which have been classified in accordance with a classification element "generates encryptions keys".

The search process is illustrated schematically in Figure 8. The search is carried out by the ontology server 46 (Figure 6) under the control of the consumer client 57. At step S 0, a search by classification is selected in order to provide the display device of consumer client 57 with the display window 58. At step S 1, the taxonomy, stop parameter R and the data string corresponding to the selected verb, noun and qualifier 61, 62, 63, are selected.

At step S 2, the ontology server 46 searches the data in the central taxonomy database 48 for subjects of classification 36 i.e. software components which have been classified in terms of an element E with a FAB that corresponds to the element string selected at step S 1. A check is made at step S 3 to determine whether more than R=20 subjects have been found that correspond to the selected element string and a display of the search results is provided at step S 4.

The resulting display is shown in Figure 7B and comprises a display window 64 provided on the display of the consumer client 57. In this example, a software component "Energy encryption" has been previously classified and stored as data for the central taxonomy in database 48 with a FAB "generates encryption keys" and so has been located by the search. The subject of the software component is displayed, referenced 65, together with details of the taxonomy in which it was found and the basis of the match. In this example, the component was found in the e-commerce taxonomy 11 and was matched based on its classification.

Figures 9 and 10 illustrate a modified searching technique in which different layers of an individual taxonomy can be searched either upwardly or downwardly. Referring to Figure 9A, the display window 58 further includes a dialogue box 66 which allows the number of layers of the taxonomy to be searched and dialogue box 67 allows the direction of searching through the layers to be controlled either upwardly, downwardly, bidirectionally or not at all. The layers of the taxonomy correspond to the layers shown in Figure 5, namely layers 36, N, E, 26, 14 and 33.

The search process is illustrated in Figure 10. Initially, the search is carried out as previously described with reference to Figure 8 and the corresponding searching steps are given the same reference numbers. Thus, at step S3, if less than R subjects have been found based on the searching of elements E at step S2, different levels of the taxonomy are searched at step S5, in a depth and direction specified by the settings of dialogue boxes 66, 67. In the example of Figure 9A, the taxonomies are to be searched upwardly by one level, according to the settings of dialogue boxes 66, 67. Thus, at step S6, the process searches up one level from the searched elements E, namely the nodes N in the taxonomy to locate subjects classified according to nodes that correspond to the search string, namely "generates encryption keys" that has been set in dialogues boxes 61, 62.

A test is performed at step S7 to determine whether more than 20 subjects have been found by the search process and the results of the search are added at step S8 to the results displayed at step S4. It will be understood that the search results produced at step S6 are achieved by navigation through the taxonomy and so the search matches are achieved by a navigated classification.

The outcome of the search is illustrated schematically in Figure 9B which illustrates that in addition to the component 65, located at step S2, "component XYZ" 68 located by the "navigated classification" of step S6 has been found.

In accordance with the invention, the search can be extended into other taxonomies and an example will now be described with reference to Figures 11A, 11B and 12.

Figure 11A illustrates the search input window 58 which further includes a dialogue box 69 to permit the user to select additional taxonomies for searching. Thus, in accordance with the invention, the taxonomy selected in dialogue box 59 is searched initially and then, if appropriate, the search is extended into other taxonomies specified in dialogue box 69. In this example, all other taxonomies are selected. The input window 58 further includes a dialogue box 70 that permits a selection of the classification syntax to be made on the basis of a verb, noun or qualifier. The classification syntax selection 70 permits a selection to be made of a part of the syntax. In the example, the element or syntax is a verb (namely an action) noun (or object) and qualifier. The verb has been selected. Also, a cross taxonomy search depth can be selected by means of dialogue box 71. The cross taxonomy search depth 71 allows the user to specify how many jumps between different taxonomies are permitted. In this example, a single jump is selected.

The search process is shown in detail in Figure 12. The initial searching process through the e-commerce taxonomy is performed according to steps S0-S8 as previously described. Then, assuming that R<20 search results have been found, the other selected taxonomies are entered at step S9. Referring back to Figure 5, links 41 stored on the basis of knowledge based equivalence are stored in the joins database 55 shown in Figure 6. At step S10 in Figure 12, the process navigates from previously matched subjects 36 in the initial, central e-commerce taxonomy 10, identified at steps S2-S4. Thus, having identified a matched subject in the subject of classification 36, a link 41 relating to the matched subject can be followed into a corresponding subject of classification 36' in satellite taxonomy 11 shown in Figure 5. A test is performed at step S11 to determine whether more than 20 search results have been located and the outcome of the searching at step S10 is displayed at step S12.

The outcome of the searching performed at step S10 is illustrated in Figure 11B. "Component ZYZ" 72 is displayed, indicated to have been found in the telecoms domain, with the match having been achieved on the basis of a knowledge based equivalence.

The search may be continued as shown at step S13 in which navigation between matched elements E in the central taxonomy 10 occurs through links 43 shown in Figure 5, to corresponding elements E' in the satellite taxonomy 11 or other satellite taxonomy 12. Again, a check is made at step S14 to see whether more than 20 search results have been obtained and the outcome of the searching performed at S13 is displayed at step S15. An example of the outcome of the searching at step S13 is shown in Figure 11B as search result 73, namely "component AYZ" located in the telecoms domain with a matching based on knowledge.

The searching process may continue as shown at step S16, in which navigation from matched elements E to nodes N occurs in the central taxonomy 10 and then to equivalent nodes N' in the satellite taxonomy 11 or other satellite taxonomies via links 42 shown in Figure 5. A check is made on the number of search results at step S17 and the outcome of the searching at step S16 is displayed at step S18. An example of the outcome is shown in Figure 11B, namely "component BYZ" 74 located in the health taxonomy corresponding to satellite taxonomy 12, matched on the basis of knowledge based equivalence.

The search may continue further on the basis of a word selection from the element syntax that is entered as step S19, on the basis of the classification elements entered in dialogue boxes 61, 62, 63 and 70 shown in Figure 11A. Thus, at step S20, the search identifies software component items that have been classified according to individual words of the syntax, and subjects of classification 36 which contain matched words are identified as a result of the search in step S22. An example 75 of the search result obtained at step S22 is shown in Figure 11B, namely "component DYZ" found in the central, e-commerce domain 10, which was matched on the basis of language.

The search may be continued as shown at step S23 in Figure 12 by navigating on the basis of matched words into the inter-domain thesaurus 34 shown in Figure 5 and thence to a subject 36' in the satellite taxonomy 11 which contains a matching word. The navigation may occur either through link 44 based on a word-to-word matching between the central taxonomy and satellite taxonomy or may occur through the inter-domain thesaurus 34 on the basis of a link 45 shown in Figure 5. Referring to Figure 11B, search result 76 corresponds to a language based matching which makes use of the inter-domain thesaurus 34 and word based matching as will be explained in more detail with reference to Figure 13 hereinafter.

If more matches are needed, the search can be continued as shown at step S26 in which words or synonyms in the semantic definitions 22, 22' and free text descriptions 35, 35' can be checked for matches. The number of search outcomes is checked at step S27 and the outcome of searching at step S26 is displayed at step S28. An example of the outcome of step S28 is illustrated by search results 76 shown in Figure 11B.

If an insufficient number of search results is provided, the user is prompted to carry out another search as shown at step S29.

It will be understood that in practice, the search may not be carried out in separate steps as described above but as a single searching operation. In addition, it is to be understood that different searching strategies fall within the scope of the invention.

Specific examples of how the searching methodology can suggest suitable software components will be described with reference to Figures 13 to 15. Figure 13 illustrates how a search carried out in the central taxonomy 10 for the e-commerce domain can link to entries in the satellite taxonomy 11 for the telecoms domain. It will be recalled that the syntax used in the two taxonomies comprises ACTIONS, OBJECTS and QUALIFIERS. The example of Figure 13 illustrates linking of ACTIONS between the e-commerce and telecoms domains.

Two software components have been classified in accordance with the taxonomies for the e-commerce and telecoms domain respectively, as shown in Table 1.

**Table 1**

| Taxonomy | Subject of Classification (36,36') | Element (E,E') |
|---|---|---|
| Central 10 (e-commerce) Satellite 11 (telecoms) | Energy Encryption Component ABC Encrypt | **Converts** readable data into unreadable **Encrypts** data |

As can be seen from Table 1 and Figure 13, the subject of classification for the e-commerce software component "Energy Encryption Component" includes a word 26 "converts" with a corresponding dictionary entry 14 and a corresponding thesaurus entry 33. Similarly, the subject of classification 36' for the software component "ABC Encrypt" for the telecoms domain, includes the word 26' "encrypts" with a corresponding dictionary entry 14' and thesaurus entry 33'.

The thesaurus entries 33, 33' for "converts" and "encrypts" are shown in Table 2. Each of them includes the term "transforms".

**Table 2**

| Taxonomy | Thesaurus Entry (33,33') |
|---|---|
| Central 10 (e-commerce) | **Converts**, Adapts, Modifies, Changes, **Transforms,** Alters, Remakes, Reworks, Remodels, Morphoses |
| Satellite 11 (telecoms) | **Encrypts**, Codes, Encodes, Scrambles, Translates, Hides, Enciphers, **Transforms** |

Referring to Table 3, the inter-domain thesaurus (34) indicates that "transforms" in the e-commerce domain corresponds to "transforms" in the telecoms domain.

**Table 3**

| Taxonomy | Inter-domain Thesaurus (34) |
|---|---|
| Central 10 (e-commerce) | **Transforms** |
| Satellite 11 (telecoms) | **Transforms** |

Figure 13 illustrates the links to the relevant terms in the data objects shown in Tables 1-3. Thus, it will be understood that when searching the central, e-commerce domain, the links will suggest corresponding entries in the telecoms domain and so searching across the two domains can be carried out by following the links, notwithstanding the differences in the taxonomies for the domains.

Figure 14 illustrates an example of an OBJECT synonym.

The definitions of software objects in the e-commerce and telecoms domain are shown in Table 4.

**Table 4**

| Taxonomy | Subject of classification (36,36') | Element (E,E') |
|---|---|---|
| Central 10 (e-commerce) | Appsofts GPD Receivables | Edits existing **customer details** |
| Satellite 11 (telecoms) | SHERRIF | Edits **user profile** |

In this example, the terms "customer details" and "user profile" are treated as compound words 26, 26' respectively and have corresponding dictionary entries 14, 14'. Referring to Table 5, the dictionary entries 14, 14' for "customer details" and "user profile" have, as a result of prior analysis, been determined to relate to one another and a cross-domain link between them has been stored in the explicit joins database 55 shown in Figure 6.

**Table 5**

| Taxonomy | Dictionary Entry (14,14') |
|---|---|
| Central 10 (e-commerce) | Customer details |
| Satellite 11 (telecoms) | User profile |

Thus, referring to Figure 14, when a search is carried out through the central taxonomy 10, the links between the data objects in the central taxonomy, give rise to suggestions of corresponding items in the satellite taxonomy 11.

Figure 15 illustrates a corresponding situation for matched ACTION OBJECTS.

Referring to Table 6, the software component "Energy Encryption Component" for the e-commerce domain has an associated element E "provides seedkeys" in the central taxonomy 10. Similarly, the software component "ABC encrypt" has an element "generates encryption keys" in the satellite taxonomy 11. The terms "provides" and "generates" in the central and satellite taxonomies comprise words 26,26' in the elements E, E' with corresponding dictionary entries 14,14' and thesaurus entries 33, 33'.

**Table 6**

| Taxonomy | Subject of classification (36,36') | Element (E,E') |
|---|---|---|
| Central 10 (e-commerce) | Energy Encryption Component | Provides seedkeys |
| Satellite 11 (telecoms) | ABC Encrypt | Generates encryption keys |

The thesaurus entries are shown in detail in Table 7

**Table 7**

| Taxonomy | Thesaurus Entry (33,33') |
|---|---|
| Central 10 (e-commerce) | **Provides**, Serves, Assists, Accommodates, **Supplies, Aids**, Gives, Delivers, Enables, Yields |
| Satellite 11 (telecoms) | Generates, Makes, Creates, Produces, Originates, Causes, Induces, Provokes, Propagates, **Supplies** |

There is common entry "supplies" in the thesaurus entries for the two domains, which gives rise to a link between them.

With regard to the term "seedkeys" in the element E for the e-commerce domain, this is entered in the inter-domain thesaurus 34, as being synonymous with "encryption keys" in the telecoms domain as shown in Table 8.

**Table 8**

| Taxonomy | Inter-domain Thesaurus (34) |
|---|---|
| Central 10 (e-commerce) | seedkeys |
| Satellite 11 (telecoms) | encryption keys |

Thus, by navigating the links shown in Figure 15 in the central taxonomy 10, links are suggested to software objects in the satellite taxonomy 11 which may satisfy the searching criteria.

Many modifications and variations of the described system fall within the scope of the invention. For example, whilst the links are shown extending from the central taxonomy 10 to the satellite taxonomy 11, the links may extend further from the satellite taxonomy 11 to other taxonomies, such as satellite taxonomy 12. Alternatively, the links may radiate outwardly from the central taxonomy 10 to both of the satellite taxonomies 11, 12. The links may extend to yet further taxonomies if appropriate.

Also, the librarian client 49 for the central taxonomy may be used to promote parts of the satellite taxonomy 11 into the central taxonomy, if it is found that those parts of the satellite taxonomy are frequently used and should be included within the central taxonomy. The librarian client may be configured to carry out integrity testing to ensure that if such promotion of elements of the satellite taxonomy occurs, that there is no conflict between the classification of software objects prior to the change in the central taxonomy.

## Claims

1. A tool for maintaining and searching a plurality of taxonomies, comprising
first and second user inputs (49,53) for maintaining a first and second individual taxonomies (10,11) that utilise different classifications;
a device (46,55) operable to create and maintain joins (41-45) between semantically equivalent terms in the taxonomies; and
a searching tool (57,46) to search for items classified in accordance with the classification of one of the taxonomies, utilising the joins to locate items classified by equivalent terms in the other of the taxonomies.

2. A tool according to claim 1 wherein each of the taxonomies is configured in a plurality of layers of specificity and the search tool is configured to search selectively for matches between a user defined searching strategy (58) and stored items classified in accordance with the taxonomy in the layers.

3. A tool according to claim 2 wherein the joins (41-45) are provided between corresponding levels in the taxonomies.

4. A tool according to any preceding claim wherein each of the taxonomies comprises elements (E, E') defined in words according to an individual syntax and at least one of the links (43) is provided between elements of the respective taxonomies.

5. A tool according to claim 4 wherein the elements (E, E') in the individual taxonomies are linked by individual nodes (N, N') and at least one of the links (42) is provided between nodes of the respective taxonomies.

6. A tool according to claim 4 or 5 wherein the elements and nodes of the individual taxonomies are defined in a respective syntax that is made up of words (26, 26') in a dictionary (14, 14') thereof.

7. A tool according to claim 6 wherein the words in the dictionary are contained in a thesaurus (33, 33') for each taxonomy and at least one of the links (43) is provided between words in the thesauri for the respective taxonomies.

8. A tool according to any preceding claim wherein at least one of the links is contained in an inter-domain thesaurus (34) that links word meanings for the two taxonomies (10, 11).

9. A client (57) operable with a server (46) to search databases that store items classified in accordance with first and second individual taxonomies (10,11) that utilise different classifications that are individually updated and maintained, with joins (41-45) between semantically equivalent terms in the taxonomies; the client being operable to provide a searching tool (57,46) to search for items classified in accordance with the classifications of one the taxonomies, utilising the joins to locate items classified by equivalent terms in the other of the taxonomies.

10. A computer program for a client (57) operable with a server (46) to search databases that store items classified in accordance with first and second individual taxonomies (10,11) that utilise different classifications that are individually updated and maintained, with joins (41-45) between semantically equivalent terms in the taxonomies; the program being operable to provide a searching tool (57,46) to search for items classified in accordance with the classifications of one the taxonomies, utilising the joins to locate items classified by equivalent terms in the other of the taxonomies.

11. A server (46) to operate with a client (57) to search databases that store items classified in accordance with first and second individual taxonomies (10,11) that utilise different classifications that are individually updated and maintained, with joins (41-45) between semantically equivalent terms in the taxonomies; the server being operable to search for items classified in accordance with the classifications of one the taxonomies, utilising the joins to locate items classified by equivalent terms in the other of the taxonomies.

12. A method of searching for stored data items that have been classified in accordance with different taxonomies that are individually maintained and updated wherein joins (41-45) are created and maintained between semantically equivalent terms in the taxonomies; the method comprising searching for items classified in accordance with the classifications of one of the taxonomies, and utilising the joins to locate items classified by equivalent terms in the other of the taxonomies.

13. A method according to claim 12 wherein each of the taxonomies is configured in a plurality of layers of specificity, including defining a search strategy and searching selectively for matches between the searching strategy (58) and stored items classified in accordance with the taxonomy in the layers.

14. A method according to claim 13 wherein the joins (41-45) are provided between corresponding levels in the taxonomies and the searching involves following the links to locate items stored according to both taxonomies.

15. A method according to claim 12, 13 or 14 wherein each of the taxonomies is respectively defined in words according to an individual linguistic syntax, and including defining the search strategy in terms of the syntax for one of the taxonomies, and finding stored items that correspond to the defined search strategy.

16. A method according to any one claims 12 to 15 wherein each of the taxonomies comprises classification elements (E, E') defined in words according to a linguistic syntax, and including defining the search strategy in terms of the syntax for one of the taxonomies, and finding stored items that are classified in terms of an element that corresponds to the defined search strategy.

17. A method according to claim 16 wherein the elements (E, E') in the individual taxonomies are linked by individual nodes (N, N') including finding stored items that are classified in terms of a node that corresponds to the defined search strategy.

18. A method according to any one of claims 12 to 17 wherein at least one of the links is contained in an inter-domain thesaurus (34) that links word meanings for the two taxonomies (10, 11), and including searching the thesaurus for the links.

19. A tool for maintaining and searching a plurality of taxonomies, substantially as hereinbefore described with reference to the accompanying drawings.

20. A method of searching a plurality of taxonomies, substantially as hereinbefore described with reference to the accompanying drawings.
